# EUROPÄISCHE PATENTSCHRIFT

(11) **EP 1 562 062 B1**
(45) Veröffentlichungstag und Bekanntmachung des Hinweises auf die Patenterteilung: **16.11.2011**
(21) Anmeldenummer: 04028086.9
(22) Anmeldetag: 26.11.2004
(51) Int. Cl.: G02B 15/173, G02B 23/02

(54) **Zoom-Fernrohr**
Zoom-telescope
Télescope à focale variable

(30) Priorität: 09.01.2004 DE 102004001481
(43) Veröffentlichungstag der Anmeldung: 10.08.2005
(73) Patentinhaber: Carl Zeiss Sports Optics GmbH, 35576 Wetzlar (DE)
(72) Erfinder: Besenmatter, Walter, Dr., 35619 Braunfels (DE); Tautz, Volker, Dr., 35578 Wetzlar (DE)
(74) Vertreter: Schmid, Wolfgang

(56) Entgegenhaltungen:
- EP-A1- 0 555 670
- DE-U- 7 041 703
- JP-A- 06 027 377
- JP-A- 2000 111 796
- US-A- 4 693 566
- US-A- 4 871 241
- US-A- 5 268 793
- IRVING B R: "Code V Test Drive", , - 1 May 1989 (1989-05-01), XP007908609,

## Beschreibung

Die Erfindung betrifft ein Zoom-Fernrohr mit einem Objektiv veränderlicher Brennweite, einem Okular fester Brennweite und einem Prismenumkehrsystem, wobei das Prismenumkehrsystem zwischen dem Objektiv und dem Okular angeordnet ist.

Ein derartiges Fernrohr mit Variierung der Vergrößerung ist aus der US 3,069,972 bekannt. Das darin dargestellte Doppelfernrohr besitzt ein Objektiv mit veränderlicher Brennweite, ein Prismenumkehrsystem und ein festbrennweitiges Okular. Das Objektiv veränderlicher Brennweite ist nach dem Prinzip des optischen Ausgleichs aufgebaut. Aus diesem Grunde ist nur eine Bewegung entlang einer optischen Achse notwendig, die von zwei beweglichen Linsen bzw. Linsengruppen, zwischen denen eine feststehende Linse angeordnet ist, ausgeführt wird. Dabei ergibt sich bei dem Prinzip des optischen Ausgleichs ein wesentlicher Nachteil, nämlich dass die Bildebene über den Vergrößerungsbereich schwankt.

Darüber hinaus ist in dem deutschen Gebrauchsmuster G 70 41 703 U ein optisches System offenbart, das ein Prismensystem zur Bildumkehr und ein Objektiv mit mindestens zwei in axialer Richtung verschiebbare Linsengruppen aufweist; ferner offenbart das US-Patent 4,871,241 ein Objektiv mit drei Linsengruppen, die längs einer optischen Achse verschiebbar sind.

Weiterhin beschreibt A. König und H. Köhler in "Die Fernrohre und Entfernungsmesser", 3. Auflage 1959 einen weiteren Fernrohrtyp, der vorwiegend für Zielfernrohre verwendet wird. Das Fernrohr besitzt ein Objektiv fester Brennweite, ein Linsenumkehrsystem veränderlicher Vergrößerung, welches zwei längs einer optischen Achse bewegliche optische Linsengruppen enthält und ein Okular fester Brennweite. Diese optischen Systeme besitzen eine große Baulänge und sind für kompakte Fernrohre bzw. Doppelfernrohre nicht geeignet.

Demgemäß ist es Aufgabe der Erfindung, ein optisches System für Fernrohre mit veränderlicher Vergrößerung zu schaffen, welches für einen universellen Einsatz vorgesehen ist und ein aufrechtes und seitenrichtiges Bild aufweist, welches unabhängig von einer eingestellten Vergrößerung augenseitig einen konstanten Bildfeldwinkel aufweist.

Diese Aufgabe wird erfindungsgemäß dadurch gelöst, dass das Objektiv aus einem positiven ersten optischen System G1 und zwei längs einer optischen Achse zur Änderung der Vergrößerung verschiebbaren optischen zweiten und dritten Systemen G2 und G3 gebildet ist, wobei das positive erste optische System G1 aus wenigstens einem Achromaten gebildet ist, wobei das zweite optische System G2 aus wenigstens zwei Achromaten gebildet ist und wobei das dritte optische System G3 aus wenigstens einem Achromaten und einer positiven Einzellinse gebildet ist.

Das Fernrohr mit veränderlicher Vergrößerung weist vom abzubildenden Objekt aus das positive erste optische System G1 auf, das beim Ändern der Vergrößerung seine Position nicht verändert. Zwei längs der optischen Achse verschiebbare optische zweite und dritte Systeme G2 und G3 dienen zur Veränderung der Vergrößerung. Das Prismenumkehrsystem dient zur Aufrichtung des Bildes. Von Vorteil ist es, wenn das verschiebbare zweite optische System G2 eine negative Brennweite und das verschiebbare dritte optische System G3 eine positive Brennweite aufweisen. Achromatische Linsensysteme, wie beispielsweise die zweiten und dritten optischen Systeme G2 und G3, werden ebenfalls zur Korrektur der chromatischen Aberration eingesetzt. Weiterhin erzeugen positive und negative Achromate, wenn diese direkt hintereinander angeordnet sind, sphärische Aberration mit entgegengesetzten Vorzeichen. Diesbezüglich ist somit auch weitestgehend die sphärische Aberration korrigiert. Weiterhin kann mit Achromaten die Koma korrigiert und auch die Abbe'sche Sinusbedingung erfüllt werden. Aus diesen Gründen ist keine Einschränkung in der Abbildungsqualität zu erwarten.

Es kann in einer sehr vorteilhaften Weise vorgesehen sein, dass zum Ausgleich der Fehlsichtigkeit eines Auges das Okular in Richtung der optischen Achse einstellbar ist, wobei der Ausgleich der Fehlsichtigkeit bei Verwendung eines binokularen Fernrohrs über ein für jedes Auge entsprechendes Okular kompensierbar ist.

Durch die Verschiebung des Okulars entlang der optischen Achse kann individuell für jeden einzelnen Benutzer die Schärfeeinstellung auf das Objekt ermöglicht werden.

Durch den erfindungsgemäßen Aufbau wird erreicht, dass über den Vergrößerungsbereich ein konstantes augenseitiges Sehfeld erhalten bleibt. Das Bild bleibt bei entsprechender Einstellung für den Benutzer über den gesamten Vergrößerungsbereich scharf, auch bei Anpassung der Einstellung auf eine geänderte Objektentfernung.

Vorteilhafte Ausgestaltungen und Weiterbildungen ergeben sich aus den weiteren Unteransprüchen und dem nachfolgend anhand der Zeichnung prinzipmäßig beschriebenen Ausführungsbeispiel.

Es zeigt:
- Figur 1: Darstellung eines optischen Systems eines Fernrohrs bei eingestellter niedriger Vergrößerung;
- Figur 2: Darstellung eines optischen Systems desselben Fern- rohrs wie in Figur 1 bei eingestellter mittleren Ver- größerung; und
- Figur 3: Darstellung eines optischen Systems desselben Fern- rohrs wie in Figur 1 und Figur 2 bei eingestellter hoher Vergrößerung.

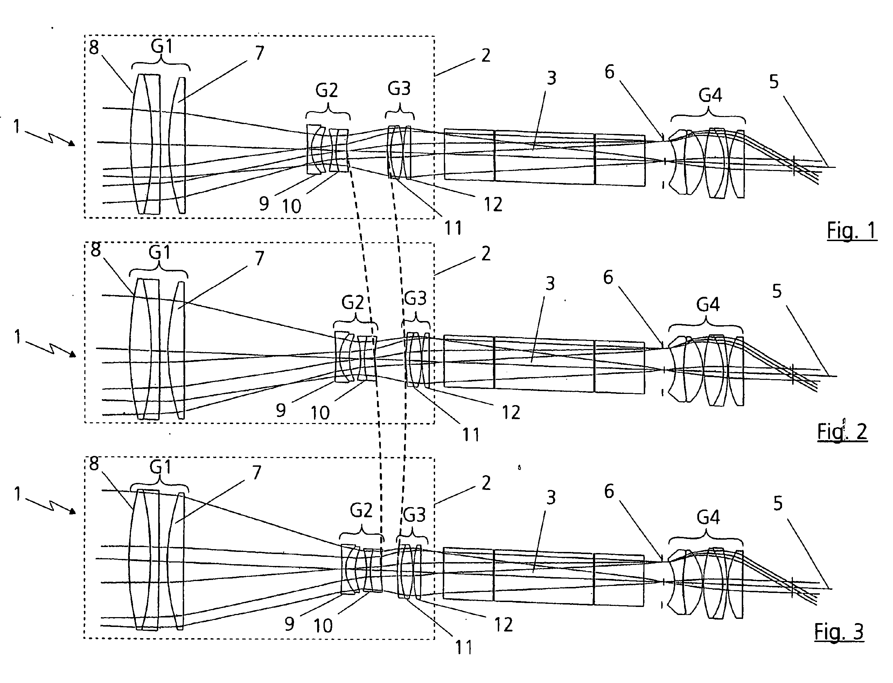

Figur 1 zeigt ein Doppelfernrohr 1, welches aus einem Objektiv 2, einem Prismenumkehrsystem 3, welches als Glasweg im gestreckten Strahlengang dargestellt ist, und einem Okular G4 gebildet ist. Das Objektiv 2 weist drei Linsensysteme, nämlich ein erstes Linsensystem G1, ein zweites Linsensystem G2 und ein drittes Linsensystem G3, auf. Das erste Linsensystem G1 besitzt insgesamt gesehen eine positive Brechkraft. Ein Achromat 8, welcher aus einem Kittglied einer positiven und einer negativen Linse gebildet ist, und eine Einzellinse 7, welche eine positive Brechkraft aufweist, bilden das erste Linsensystem G1, wobei der Achromat 8 und die Einzellinse 7 in einem gewissen Abstand voneinander auf einer optischen Achse 5 angeordnet sind. Selbstverständlich kann das erste Linsensystem G1 auch nur von wenigstens einem Achromaten gebildet sein. Das zweite Linsensystem G2 besteht jeweils aus zwei Achromate 9 und 10, wobei jeweils ein Achromat aus einer Positiv- und einer Negativlinse besteht. Die beiden Achromate 9 und 10 sind in einem bestimmten Abstand voneinander angeordnet. Das dritte Linsensystem G3 weist einen Achromaten 11 und eine Einzellinse 12 auf. Der Achromat 11 besteht ebenfalls aus einer positiven und einer negativen Linse, die, wie auch die Achromaten 9 und 10 der Linsengruppe G2, miteinander verkittet sind. Die Einzellinse 12 besitzt eine positive Brechkraft und ist in direkter Berührung mit dem Achromaten 11 auf der optischen Achse 5 angeordnet. Selbstverständlich können die einzelnen Linsensysteme auch aus mehreren Achromaten oder Einzellinsen gebildet sein, wobei aber immer bedacht werden sollte, dass die Funktionalität des optischen Gasamtsystems nicht verändert wird.

Die beiden zweiten und dritten Linsensysteme G2 und G3 des Objektivs 2 bilden das Zoomsystem. Zur Änderung der Vergrößerung können diese beiden optischen Systeme G2 und G3 längs der optischen Achse 5 verschoben werden.

Das Prismenumkehrsystem 3 dient zur Aufrichtung des umgekehrten Zwischenbildes. Das Prismenumkehrsystem 3 kann als Porro-Prismenumkehrsystem oder auch als Dachkant-Prismenumkehrsystem ausgebildet sein.

Durch die weiter auseinanderliegenden Objektive bei Fernrohren mit Porro-Prismenumkehrsystem ist die Plastik, das bedeutet die räumliche Abbildungskapazität, deutlich höher als bei anderen Umkehrsystemen. Ein weiterer Vorteil ist, dass der Durchmesser der Objektive nicht begrenzt wird, was bedeutet, dass eine hohe optische Leistung bezüglich Austrittspupille möglich ist.

Bei Dachkant-Prismenumkehrsystemen liegen die Objektive eng beieinander, was die Verwendbarkeit im extremen Nahbereich ermöglicht. Ein weiterer Vorteil der Dachkant-Prismenumkehrsysteme liegt darin, dass diese konstruktiv leichter mit Innenfokussierung ausgestattet werden können, was dazu führt, dass das Fernrohr am Gehäuse kaum noch bewegliche Teile besitzt. Deshalb kann das Fernrohr extrem gut abgedichtet werden.

Zwischen dem Prismenumkehrsystem 3 und dem Okular G4 ist zur Begrenzung des Sehfeldes eine Feldblende 6 angeordnet.

Die Einstellung auf endliche Objektentfernungen kann durch Verschieben des kompletten ersten optischen Systems G1 längs der optischen Achse 5 oder eines Teiles des optischen Systems G1, wie z.B. der Einzellinse 7, erfolgen. Durch diesen erfindungsgemäßen Aufbau wird erreicht, dass über den Vergrößerungsbereich ein konstantes Sehfeld erhalten bleibt, das bei Verwendung eines Weitwinkelokulars von 60° bis ca. 80° liegen kann. Das Bild bleibt bei entsprechender Einstellung für den Benutzer über den gesamten Vergrößerungsbereich scharf, auch bei Anpassung der Einstellung auf eine geänderte Objektentfernung. In der Stellung der niedrigen Vergrößerung kann das dritte optische System G3, um auf kürzere Objektentfernungen als mit der Einstellung durch das erste optische System G1 oder eines Teiles, wie beispielsweise mit der Einzellinse 7, möglich ist, zusätzlich zu der für die Vergrößerungseinstellung notwendigen Verschiebung in Richtung des Prismenumkehrsystems 3 längs der optischen Achse 5 verschoben werden.

Die notwendigen Verschiebungen entlang der optischen Achse 5 der zweiten und dritten optischen Systeme G2 und G3 zur Einstellung der Vergrößerung, sowie die Verschiebung des dritten optischen Systems G3 zur Realisierung einer kurzen Objektentfernung bei der niedrigen Vergrößerung, können mittels mechanischer Kurven oder über elek-trische Antriebe, die elektronisch angesteuert werden, erfolgen. Dadurch können die für die gewählte Vergrößerung erforderlichen Positionen der zweiten und dritten optischen Systeme G2 und G3 realisiert werden. Die mechanischen Kurven bzw. die elektrischen Antriebe sind in den Ausführungsbeispielen, da hier nur die Anordnung der Linsen und der Strahlengang durch die entsprechenden Linsen dargestellt ist, nicht aufgezeigt. Die Verschiebung des ersten optischen Systems G1 oder eines Teiles dieses Systems zur Einstellung der Objektentfernung kann hier auch wieder mechanisch oder mit einem elektrischen Antrieb, der auch hier nicht näher dargestellt ist, erfolgen.

Da grundsätzlich der Fernrohraufbau dem Ausführungsbeispiel 1 entspricht, werden für gleiche Teile in den weiteren Ausführungsbeispielen auch die gleichen Bezugszeichen verwendet.

Figur 2 zeigt das in Figur 1 dargestellte Fernrohr 1 bei mittlerer Vergrößerung. Wie hier zu erkennen ist, werden zur Erreichung einer mittleren Vergrößerung die zweiten und dritten optischen Systeme G2 und G3 entlang der optischen Achse 5 verschoben. Das zweite optische System G2 wird in Richtung Prismenumkehrsystem 3 verschoben, wobei das dritte optische System G3 ebenfalls in Richtung Prismenumkehrsystem 3 bewegt wird. Der Abstand der beiden optischen Systeme G3 und G2 voneinander ist bei mittlerer Vergrößerung geringer als bei niedriger Vergrößerung. Die Bewegung der beiden optischen Systeme G2 und G3 muss genau aufeinander abgestimmt sein. Auch hier kann die Bewegung über Steuerkurven oder elektrische Antriebe erfolgen.

Wie die zweiten und dritten optischen Systeme G2 und G3 zueinander bei hoher Vergrößerung ausgerichtet sind, ist in Figur 3 dargestellt. Die Wegdifferenz der beiden optischen Systeme G2 und G3 ist im Vergleich zur Figur 2 geringer geworden. Des weiteren kann auch hier wieder das optische System G1 oder eines Teiles dieses Systems zur Einstellung der Objektentfernung verschoben werden.

Der normale Fehlsichtigkeitsausgleich wird hier durch das Okular G4 erreicht.

Das Fernrohr 1 ist so ausgelegt, dass eine Vergrößerung von 6-bis 12-fach erreicht werden kann. Der wesentliche Vorteil dieser Anordnung gegenüber bestehenden Problemen bekannter Fernrohroptiken ist, dass die Brennweite des Okulars nicht verändert wird und so die variable Vergrößerung eines Fernrohres bei Zusammenwirken mit einem festbrennweitigen Okular bzw. festangeordnetem Okular erreicht wird. Somit kann gewährleistet werden, dass die Lage der Austrittspupille bei Veränderung der Vergrößerung konstant bleiben kann.

## Patentansprüche

1. Zoom-Fernrohr mit einem Objektiv (2) veränderlicher Brennweite, einem Okular G4 fester Brennweite und einem Prismenumkehrsystems (3), **dadurch gekennzeichnet, dass** das Objektiv (2) dreigliedrig aus einem positiven ersten zur Entfernungseinstellung komplett oder zumindest teilweise entlang der optischen Achse (5) verschiebbaren optischen System G1 und einem zweiten sowie einem dritten längs der optischen Achse (5) zur Änderung der Vergrößerung verschiebbaren optischen Systemen G2 und G3 gebildet ist, wobei das positive erste optische System G1 aus wenigstens einem Achromat (8) gebildet ist, wobei das zweite optische System G2 aus wenigstens zwei Achromaten (9) (10) gebildet ist und wobei das dritte optische System G3 aus wenigstens einem Achromat (11) und einer positiven Einzellinse (12) gebildet ist und wobei das optische System G1 objektseitig angeordnet ist, das dritte optische System G3 bildseitig angeordnet ist und das zweite optische System G2 zwischen den optischen Systemen G1 und G3 angeordnet ist, und wobei das verschiebbare zweite optische System G2 eine negative und das verschiebbare dritte optische System G3 eine positive Brennweite aufweist und wobei die beiden Achromate (9, 10) des optischen Systems G2 in einem bestimmten Abstand voneinander angeordnet sind, wobei der Achromat (11) und die positive Einzellinse (12) des optischen Systems G3 sich berühren und wobei das Prismenumkehrsystem zwischen der letzten Fläche von G3 und einer Feldblende (6) angeordnet ist, derart, dass eine 6-bis 12-fache Vergrößerung des Fernrohrs einstellbar ist und dessen augenseitiges Sehfeld und die Austrittspupille über den Vergrößerungsbereich konstant sind.

2. Zoom-Fernrohr nach Anspruch 1, **dadurch gekennzeichnet, dass** das erste positive optische System G1 aus wenigstens einem Achromat (8) und einer positiven Linse (7) gebildet ist.

3. Zoom-Fernrohr nach Anspruch 1, **dadurch gekennzeichnet, dass** zum Ausgleich der Fehlsichtigkeit eines Auges das Okular G4 in Richtung der optischen Achse (5) einstellbar ist, wobei der Ausgleich der Fehlsichtigkeit bei Verwendung eines binokularen Fernrohrs über ein für jedes Auge entsprechendes Okular kompensierbar ist.

4. Zoom-Fernrohr nach Anspruch 1 und 3, **dadurch gekennzeichnet, dass** das Okular G4 als Weitwinkelokular ausgebildet ist.

5. Zoom-Fernrohr nach Anspruch 1 und 2, **dadurch gekennzeichnet, dass** zur Verschiebung der zweiten und dritten optischen Systeme G2 und G3 entlang der optischen Achse (5) mechanische Kurven vorgesehen sind.

6. Zoom-Fernrohr nach Anspruch 1 und 2, **dadurch gekennzeichnet, dass** zur Verschiebung der zweiten und dritten optischen Systeme G2 und G3 entlang der optischen Achse (5) elektrische Antriebe vorgesehen sind.

7. Zoöm-Fernrohr nach Anspruch 1, **dadurch gekennzeichnet, dass** zur Verschiebung des ersten optischen Systems G1 oder eines Teils (7) des ersten optischen Systems G1 entlang der optischen Achse (5) mechanische Kurven vorgesehen sind.

8. Zoom-Fernrohr nach Anspruch 1, **dadurch gekennzeichnet, dass** zur Verschiebung des ersten optischen Systems G1 oder eines Teils (7) des ersten optischen Systems G1 entlang der optischen Achse (5) ein elektrischer Antrieb vorgesehen ist.

## Claims

1. Zoom telescope having an objective (2) of variable focal length, and eyepiece G4 of fixed focal length and a prism inversion system (3), **characterised in that** the objective (2) is formed in three parts from a positive first optical system G1 for the range setting displaceable completely or at least partially along the optical axis (5) and a second and a third optical system G2 and G3 displaceable along the optical axis (5) for changing the magnification, the positive first optical system G1 being formed from at least one achromat (8), the second optical system G2 being formed from at least two achromats (9) (10) and the third optical system G3 being formed from at least one achromat (11) and a positive single lens (12), and the optical system G1 being arranged on the object side, the third optical system G3 being arranged on the image side and the second optical system G2 being arranged between the optical systems G1 and G3, and the displaceable second optical system G2 having a negative focal length and the displaceable third optical system G3 having a positive focal length, and the two achromats (9, 10) of the optical system G2 being arranged at a particular distance from one another, the achromat (11) and the positive single lens (12) of the optical system G3 touching one another and the prism inversion system being arranged between the last surface of G3 and a field stop (6) in such a way that a times 6 to 12 magnification of the telescope can be set and its field of view on the eye side and the exit pupil are constant over the magnification range.

2. Zoom telescope according to Claim 1, **characterised in that** the first positive optical system G1 is formed from at least one achromat (8) and a positive lens (7).

3. Zoom telescope according to Claim 1, **characterised in that** the eyepiece G4 is adjustable in the direction of the optical axis (5) in order to compensate for the visual defect of an eye, the compensation for the visual defect when using a binocular telescope being compensatable by means of a corresponding eyepiece for each eye.

4. Zoom telescope according to Claims 1 and 3, **characterised in that** the eyepiece G4 is formed as a wide-angle eyepiece.

5. Zoom telescope according to Claims 1 and 2, **characterised in that** mechanical curves are provided for the displacement of the second and third optical systems G2 and G3 along the optical axis (5).

6. Zoom telescope according to Claims 1 and 2, **characterised in that** electrical drives are provided for the displacement of the second and third optical systems G2 and G3 along the optical axis (5).

7. Zoom telescope according to Claim 1, **characterised in that** mechanical curves are provided for the displacement of the first optical system G1 or a part (7) of the first optical system G1 along the optical axis (5).

8. Zoom telescope according to Claim 1, **characterised in that** an electrical drive is provided for the displacement of the first optical system G1 or a part (7) of the first optical system G1 along the optical axis (5).

## Revendications

1. Télescope à focale variable comportant un objectif (2) à focale variable, un oculaire G4 à focale fixe et un système redresseur à prisme (3), **caractérisé en ce que** l'objectif (2) est à trois éléments, et formé d'un premier système optique convergent G1 mobile en translation, en entier ou au moins en partie, le long de l'axe optique (5) pour le réglage de la distance ainsi que d'un deuxième et d'un troisième système optique G2 et G3 mobiles en translation le long de l'axe optique (5) pour la variation du grossissement, le premier système optique convergent G1 étant formé d'au moins un achromat (8), le deuxième système optique G2 étant formé d'au moins deux achromats (9) (10) et le troisième système optique G3 étant formé d'au moins un achromat (11) et d'une lentille simple convergente (12), le système optique G1 étant disposé côté objet, le troisième système optique G3 étant disposé côté image et le deuxième système optique G2 étant disposé entre les systèmes optiques G1 et G3, le deuxième système optique G2 mobile en translation ayant une focale négative et le troisième système optique G3 mobile en translation ayant une focale positive, les deux achromats (9, 10) du système optique G2 étant disposés à un certain écartement l'un de l'autre, l'achromat (11) et la lentille simple convergente (12) du système optique G3 se touchant, le système redresseur à prisme étant disposé entre la dernière surface de G3 et un diaphragme de champ (6), de sorte que le grossissement du télescope est réglable de 6 à 12 fois et que le champ côté oeil et la pupille de sortie sont constants sur la plage du grossissement.

2. Télescope à focale variable selon la revendication 1, **caractérisé en ce que** le premier système optique convergent G1 est composé d'au moins un achromat (8) et d'une lentille convergente (7).

3. Télescope à focale variable selon la revendication 1, **caractérisé en ce que**, pour compenser l'amétropie d'un oeil, l'oculaire G4 est réglable selon la direction de l'axe optique (5), la compensation de l'amétropie pouvant être équilibrée dans le cas de l'utilisation d'une lunette binoculaire en prévoyant un oculaire approprié pour chaque oeil.

4. Télescope à focale variable selon les revendications 1 et 3, **caractérisé en ce que** l'oculaire G4 est constitué par un oculaire grand angle.

5. Télescope à focale variable selon les revendications 1 et 2, **caractérisé en ce que** des cames mécaniques sont prévues pour la translation des deuxième et troisième systèmes optiques G2 et G3 le long de l'axe optique (5).

6. Télescope à focale variable selon les revendications 1 et 2, **caractérisé en ce que** des entraînements électriques sont prévus pour la translation des deuxième et troisième systèmes optiques G2 et G3 le long de l'axe optique (5).

7. Télescope à focale variable selon la revendication 1, **caractérisé en ce que** des cames mécaniques sont prévues pour la translation du premier système optique G1 ou d'une partie (7) du premier système optique G1 le long de l'axe optique (5).

8. Télescope à focale variable selon la revendication 1, **caractérisé en ce qu'**un entraînement électrique est prévu pour la translation du premier système optique G1 ou d'une partie (7) du premier système optique G1 le long de l'axe optique (5).
